(19) Europäisches Patentamt
European Patent Office
Office européen des brevets

(11) **EP 3 084 681 B1**

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **15712632.7**

(22) Anmeldetag: **27.03.2015**

(51) Internationale Patentklassifikation (IPC):
**G06V 20/56** (2022.01)    **G06T 7/277** (2017.01)

(52) Gemeinsame Patentklassifikation (CPC):
**G06V 20/588; G06T 7/277**

(86) Internationale Anmeldenummer:
**PCT/EP2015/056717**

(87) Internationale Veröffentlichungsnummer:
**WO 2015/150256 (08.10.2015 Gazette 2015/40)**

(54) **VERFAHREN ZUR FAHRSPURERKENNUNG**

METHOD FOR LANE RECOGNITION

PROCÉDÉ DE DÉTECTION DE VOIE DE CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2014 EP 14163567**

(43) Veröffentlichungstag der Anmeldung:
**26.10.2016 Patentblatt 2016/43**

(73) Patentinhaber: **Aptiv Technologies Limited St. Michael (BB)**

(72) Erfinder:
• **MEUTER, Mirko**
  **40699 Erkrath (DE)**
• **ZHAO, Kun**
  **47059 Duisburg (DE)**
• **SZUMILAS, Lech**
  **Palo Alto,**
  **94306,CA (US)**
• **MÜLLER, Dennis**
  **47445 Moers (DE)**
• **NUNN, Christian**
  **42499 Hückeswagen (DE)**

(74) Vertreter: **Manitz Finsterwald Patent- und Rechtsanwaltspartnerschaft mbB Martin-Greif-Strasse 1 80336 München (DE)**

(56) Entgegenhaltungen:
• KUN ZHAO ET AL: "A novel multi-lane detection and tracking system", INTELLIGENT VEHICLES SYMPOSIUM (IV), 2012 IEEE, IEEE, 3. Juni 2012 (2012-06-03), Seiten 1084-1089, XP032452959, DOI: 10.1109/IVS.2012.6232168 ISBN: 978-1-4673-2119-8 in der Anmeldung erwähnt
• "A new multi-lanes detection using multi-camera for robust vehicle location", INTELLIGENT VEHICLES SYMPOSIUM, 2005. PROCEEDINGS. IEEE LAS VEGAS, NV, USA JUNE 6-8, 2005, PISCATAWAY, NJ, USA, 6. Juni 2005 (2005-06-06), Seiten 700-705, XP010833877, ISBN: 978-0-7803-8961-8
• ALBERT S HUANG ET AL: "Probabilistic lane estimation for autonomous driving using basis curves", AUTONOMOUS ROBOTS, KLUWER ACADEMIC PUBLISHERS, BO, Bd. 31, Nr. 2 - 3, September 2011 (2011-09), Seiten 269-283, XP019949717, ISSN: 1573-7527, DOI: 10.1007/S10514-011-9251-2
• MIRKO MEUTER ET AL: "A novel approach to lane detection and tracking", INTELLIGENT TRANSPORTATION SYSTEMS, 2009. ITSC '09. 12TH INTERNATIONAL IEEE CONFERENCE ON, IEEE, PISCATAWAY, NJ, USA, 4. Oktober 2009 (2009-10-04), Seiten 1-6, XP031560119, ISBN: 978-1-4244-5519-5 in der Anmeldung erwähnt
• Christopher M Bishop: "Graphical Models" In: "Pattern Recognition and Machine Learning", 2006, Springer, XP055191714, Seiten 359-422, Seite 382, Zeilen 1-4

- **MIRKO MAHLISCH ET AL: "Heterogeneous Fusion of Video, LIDAR and ESP Data for Automotive ACC Vehicle Tracking", MULTISENSOR FUSION AND INTEGRATION FOR INTELLIGENT SYSTEMS, 2006 IEEE INTERNATIONAL CONFERENCE ON, IEEE, PI, 3 September 2006 (2006-09-03), pages 139-144, XP031034292, ISBN: 978-1-4244-0566-4**
- **MACAVEIU ADRIAN ET AL: "Automotive radar target tracking by Kalman filtering", 2013 11TH INTERNATIONAL CONFERENCE ON TELECOMMUNICATIONS IN MODERN SATELLITE, CABLE AND BROADCASTING SERVICES (TELSIKS), IEEE, vol. 2, 16 October 2013 (2013-10-16), pages 553-556, XP032539911, DOI: 10.1109/TELSKS.2013.6704439 ISBN: 978-1-4799-0899-8 [retrieved on 2014-01-06]**
- **MATHIAS HABERJAHN ET AL: "Vehicle environment detection by a combined low and mid level fusion of a laser scanner and stereo vision", INTELLIGENT TRANSPORTATION SYSTEMS (ITSC), 2011 14TH INTERNATIONAL IEEE CONFERENCE ON, IEEE, 5 October 2011 (2011-10-05), pages 1634-1639, XP032023487, DOI: 10.1109/ITSC.2011.6083092 ISBN: 978-1-4577-2198-4**

**Beschreibung**

Die vorliegende Erfindung betrifft ein Verfahren zur Fahrspurerkennung für ein kamerabasiertes Fahrerassistenzsystem, welches eine an einem Fahrzeug angebrachte Kamera zur Aufnahme von Bildern eines vor dem Fahrzeug befindlichen Verkehrsraumes aufweist, mit den Schritten, dass in von der Kamera aufgenommenen Bildern diejenigen Bildbereiche als erkannte Fahrspurmarkierungen identifiziert werden, welche ein vorgegebenes Erkennungskriterium erfüllen, und wenigstens zwei erkannte Fahrspurmarkierungen als zu verfolgende Fahrspurmarkierungen einem Tracking-Prozess unterzogen werden, bei welchem die zeitliche Änderung des Verlaufs der wenigstens zwei zu verfolgenden Fahrspurmarkierungen in der Fahrbahnebene mittels eines gemeinsamen rekursiven Zustandsschätzers, nämlich eines erweiterten Kalman-Filters, verfolgt wird.

Das Tracking von Fahrspurmarkierungen ist für verschiedene Arten von Fahrerassistenzsystemen in modernen Kraftfahrzeugen bedeutsam. Beispielsweise kann ein Spurhalteassistent (lane departure warning, LDW) das Tracking von Fahrspurmarkierungen dazu verwenden, die Position des Kraftfahrzeugs innerhalb der Fahrspur zu bestimmen und bei einem zu starken Annähern an den Fahrspurrand ein Warnsignal auszugeben. Es sind auch Systeme zur Spurhalteunterstützung (lane keeping support, LKS) bekannt, welche das Halten der aktuellen Fahrspur durch einen kontinuierlichen Lenk-, Brems- und/oder Antriebsstrangeingriff unterstützen. Ferner gibt es Bestrebungen, autonome Fahrzeuge bereitzustellen, welche selbständig navigieren und daher in besonderem Maße auf eine robuste und zuverlässige Fahrspurerkennung angewiesen sind.

Bei einem Verfahren der eingangs genannten Art werden mittels grundsätzlich bekannter Bildverarbeitungstechniken solche Objekte in einem Kamerabild detektiert, welche möglicherweise Fahrspurmarkierungen darstellen. Bei diesen erkannten Fahrspurmarkierungen kann es sich auch um markierungsähnliche Objekte wie Leitplanken, Teernähte und Straßenränder handeln. Deshalb werden vorzugsweise nicht alle erkannten Objekte mittels Tracking verfolgt, sondern lediglich eine Untergruppe dieser Objekte, welche z. B. anhand weiterer Sensoreingaben oder Bildverarbeitungstechniken als "echte" Fahrspurmarkierungen klassifiziert wurden. Bei vielen Anwendungen reicht es aus, die so genannte Eigen-Fahrspur zu erkennen, auf welcher das Fahrzeug aktuell fährt, und demgemäß lediglich eine linke und eine rechte Begrenzungsmarkierung dieser Eigen-Fahrspur in das Tracking einzubeziehen. Im Rahmen des Trackings werden die lokale Position und die lokale Steigung von Modellkurven, welche die Fahrspurmarkierungen angenähert beschreiben, für einen künftigen Zeitpunkt vorhergesagt und mit nachfolgenden Detektionen abgeglichen.

Rekursive Zustandsschätzer dienen hierbei allgemein der näherungsweisen Projektion eines Systemzustands in die Zukunft und sind auf dem Fachgebiet grundsätzlich bekannt. Konkret besitzt ein bei dem erfindungsgemäßen Verfahren eingesetzter Zustandsschätzer eine Prädiktor-Korrektor-Struktur.

Das Verfolgen einer linken und einer rechten Fahrspurmarkierung mittels eines einzigen Zustandsschätzers kann beispielsweise unter der Annahme erfolgen, dass die vor einem Fahrzeug befindlichen Fahrspurmarkierungen parallel zueinander verlaufen - was in vielen tatsächlichen Verkehrssituationen der Fall ist. Ein solches Tracking-Verfahren kann einen hohen Grad an Robustheit erreichen, da sich die einzelnen Fahrspurmarkierungen gewissermaßen gegenseitig stabilisieren. Es gibt jedoch auch Verkehrssituationen, in welchen nicht alle Fahrspurmarkierungen parallel zueinander verlaufen, z. B. bei vorhandenen Verzweigungen. In solchen Situationen kann das dem Tracking zugrunde gelegte Modell nicht mit der Realität in Einklang gebracht werden und der Tracking-Algorithmus versagt. Dies kann die Leistungsfähigkeit eines Fahrerassistenzsystems erheblich beeinträchtigen und ist insbesondere bei autonomen Fahrzeugen inakzeptabel.

Um das Problem der in der Realität bisweilen nicht parallel zueinander verlaufenden Fahrspurmarkierungen zu bewältigen, könnten im Prinzip zwei oder mehr erkannte Fahrspurmarkierungen einem separaten Tracking-Prozess unterzogen werden. Ein solches, auch "Multi-Target-Tracking" genanntes Fahrspurerkennungs-Verfahren ist in dem Aufsatz von Kun Zhao et al: "A Novel Multi-lane Detection and Tracking System", Intelligent Vehicles Symposium (IV), 2012, IEEE, 3. Juni 2012, Seiten 1084-1089, XP032452959, DOI: 10.1109/IVS.2012.6232168, ISBN: 978-1-4673-2119-8 offenbart.

Da hier keine speziellen Nebenbedingungen zu erfüllen sind, verspricht die Vorgehensweise eine hohe Flexibilität. Da sich die einzeln verfolgten Objekte jedoch nicht gegenseitig stabilisieren, ist der erzielbare Grad an Robustheit vergleichsweise gering. Außerdem erfordert das unabhängige Tracking mehrerer Objekte einen großen Rechenaufwand.

Der vorliegenden Erfindung liegt daher die Aufgabe zugrunde, ein Verfahren der eingangs genannten Art zur Verfügung zu stellen, welches mit vergleichsweise geringem Rechenaufwand eine robuste Fahrspurerkennung ermöglicht und insbesondere auch in komplexen oder ungewöhnlichen Verkehrssituationen wie z. B. Baustellen zuverlässige Ergebnisse liefert.

Diese Aufgabe wird durch ein Verfahren mit den Merkmalen des Anspruchs 1 gelöst.

Erfindungsgemäß ist vorgesehen, dass mittels des Zustandsschätzers für wenigstens zwei der zu verfolgenden Fahrspurmarkierungen separate Verläufe geschätzt werden, für mehrere der erkannten Fahrspurmarkierungen ein jeweiliger Offset-Wert ermittelt wird, welcher einen Querversatz der erkannten Fahrspurmarkierung relativ zu einer parallel zu einer Längsmittelachse des Fahrzeugs verlaufenden Referenzachse angibt, und mittels eines zusätzlichen Schätzverfahrens eine Zuordnung der ermittelten Offset-Werte zu jeweils einem der separaten Verläufe der zu verfolgenden Fahrspurmarkierungen vorgenommen wird.

Die Offset-Werte können im Rahmen der Identifizierung unmittelbar aus den Bilddaten ermittelt werden. Ein Offset-Wert gibt den Achsenabschnitt einer die betreffende Fahrspurmarkierung näherungsweise beschreibenden Funktion auf der quer zum Fahrzeug verlaufenden y-Achse an. Im Rahmen der Erfindung werden die Offset-Werte jeweils einem der separaten Verläufe zugeordnet. Dies eröffnet die Möglichkeit, mehrere unabhängige Verlaufshypothesen zuzulassen und dennoch die in der Praxis meist gegebene Parallelität der Fahrspurmarkierungen zur Stabilisierung des Algorithmus auszunutzen. Somit kann das Tracking insgesamt robuster gestaltet werden. Insbesondere können auch komplexe Verkehrssituationen sicher bewältigt werden. Im Vergleich zu einem "Multi-Target-Tracking", welches z. B. den gleichzeitigen Einsatz mehrerer Kalman-Filter voraussetzt, ist der Rechenaufwand lediglich gering.

Der Zustandsschätzer verwendet einen Zustandsvektor, dessen Komponenten Verlaufs-Parameter für jede der zu verfolgenden Fahrspurmarkierungen und zusätzlich mehrere durch die Offset-Werte gebildete Offset-Parameter umfasst. Insbesondere können die Modellkurve beschreibende Steigungen, Krümmungen oder Krümmungsänderungen Komponenten des Zustandsvektors bilden. Bei Verwendung eines Polynoms 3. Grades als Modellkurve können z. B. die Koeffizienten des linearen, quadratischen und kubischen Glieds die Verlaufs-Parameter bilden. Somit können die separaten Verläufe und die Offset-Werte - also gewissermaßen die Kurvenform einerseits und die Kurvenposition andererseits - einem gemeinsamen Schätzverfahren unterzogen werden, wobei lediglich ein Zustandsschätzer gehandhabt werden muss.

Erfindungsgemäß werden für genau zwei der zu verfolgenden Fahrspurmarkierungen separate Verläufe geschätzt, wobei die Zuordnung der ermittelten Offset-Werte zu jeweils einem der zwei separaten Verläufe durch einen Satz von binären Parametern angegeben wird. Das Verfolgen von lediglich zwei Fahrspurmarkierungen entsprechend einer linken und einer rechten Fahrspurbegrenzung ist wie erwähnt im Allgemeinen für eine Erkennung der Eigen-Fahrspur ausreichend. Bei Vorliegen von lediglich zwei separaten Verläufen kann jede Einzel-Zuordnung eines Offset-Werts zu einem der Verläufe durch einen binären Parameter oder eine Indikator-Variable vollständig charakterisiert werden. Speziell kann festgelegt sein, dass ein binärer Parameter mit dem Wert 1 angibt, dass der betreffende Offset-Wert dem ersten der separaten Verläufe zugeordnet wird, wohingegen ein binärer Parameter mit dem Wert 0 angibt, dass der Offset-Wert dem anderen Verlauf zugeordnet wird. Demgemäß kann für jeden der - gegebenenfalls durchnummerierten - Offset-Werte ein eigener binärer Parameter definiert werden, dessen Wert auf einen der separaten Verläufe verweist. Auf diese Weise kann die Zuordnung zwischen den Offset-Werten und den Verläufen mathematisch gehandhabt werden. Die Werte der binären Parameter können z. B. als zeitlich veränderlich angenommen und gemeinsam mit den separaten Verläufen - bevorzugt auch gemeinsam mit den zu ermittelnden Offset-Werten selbst - geschätzt werden.

Der Satz von binären Parametern kann insbesondere zur Parametrisierung einer den Verlauf der Fahrspur angenähert beschreibenden Modellkurve wie z. B. einer Klothoide herangezogen werden. Konkret kann die Modellkurve als Summe zweier Verlaufsterme und eines Offset-Werts angegeben werden, wobei einer der Verlaufsterme mit dem binären Parameter selbst und der andere Verlaufsterm mit der Differenz aus 1 und dem binären Parameter zu multiplizieren ist. In Abhängigkeit vom Wert des binären Parameters wird dann entweder nur der erste Verlaufsterm oder nur der zweite Verlaufsterm mit dem betreffenden Offset-Wert kombiniert.

Die Erfindung sieht vor, dass gegebene Wertekombinationen des Satzes von binären Parametern als Eingangsvariablen zur Erzeugung zusätzlicher Schätzhypothesen verwendet werden. Die Zuordnung der Offset-Werte zu einzelnen Verläufen kann somit einem mathematischen Schätzprozess zugänglich gemacht werden.

Die Erfindung sieht weiterhin vor, dass für jede erzeugte Hypothese unter Verwendung der Ungarischen Methode eine separate Zuordnung von Messwerten zu den Fahrspurmarkierungen durchgeführt wird. Die Messwerte oder Beobachtungen können auf diese Weise besonders effektiv den einzelnen Markierungen zugeordnet werden.

Es kann insbesondere vorgesehen sein, dass der Tracking-Prozess für mehrere unterschiedliche, bevorzugt für alle möglichen, Hypothesen separat durchgeführt wird und, beispielsweise nach einer vorgegebenen Anzahl von Rechenzyklen, mittels des zusätzlichen Schätzverfahrens eine wahrscheinlichste Hypothese bestimmt wird, für welche die Abweichung zwischen den geschätzten Verläufen der zu verfolgenden Fahrspurmarkierungen und den Verläufen von erkannten Fahrspurmarkierungen am geringsten ist. Zur Bestimmung der günstigsten Zuordnung werden also einfach alle möglichen Zuordnungen ausprobiert, um so zu ermitteln, bei welcher Zuordnung die Beobachtungen am besten erklärt werden. Es hat sich herausgestellt, dass die optimale Zuordnung auf diese Weise in einer relativ kurzen Zeitspanne gefunden werden kann.

Bevorzugt werden in Einzelvergleichsschritten jeweils lediglich zwei Tracking-Prozesse für verschiedene Hypothesen gleichzeitig durchgeführt. Dadurch kann der gesamte Rechenaufwand über die Zeit verteilt werden, um so die Leistungsanforderungen für das zugehörige Computer-System gering zu halten.

Eine Ausführungsform der Erfindung sieht vor, dass beginnend mit einer beliebigen Starthypothese aufeinanderfolgend mehrere Einzelvergleichsschritte durchgeführt werden, wobei jeweils die wahrscheinlichste Hypothese eines vorangegangenen Einzelvergleichsschritts mit einer bislang noch nicht einem Einzelvergleichsschritt unterzogenen Hy-

pothese verglichen wird. Mittels eines derartigen Vorgehens kann bei geringem Rechenaufwand das globale Optimum gefunden werden, wobei unwahrscheinliche Hypothesen sukzessive aussortiert werden.

Zum Vornehmen der Zuordnung der ermittelten Offset-Werte zu jeweils einem der separaten Verläufe der zu verfolgenden Fahrspurmarkierungen kann ein parametrisches Schätzverfahren, insbesondere ein Maximum-Likelihood-Verfahren, angewendet werden. Grundsätzlich könnte auch ein auf einem interagierenden Mehrfachmodell-Filter (IMM-Filter) beruhendes Verfahren angewendet werden.

Gemäß einer weiteren Ausführungsform der Erfindung werden für wenigstens drei und vorzugsweise für wenigstens vier erkannte Fahrspurmarkierungen jeweilige Offset-Werte ermittelt. Es hat sich herausgestellt, dass sich bei Ermittlung lediglich zweier Offset-Werte im Allgemeinen der für das zusätzliche Schätzverfahren zu veranschlagende Aufwand im Allgemeinen nicht lohnt.

Es kann ferner vorgesehen sein, dass vor dem Durchführen des zusätzlichen Schätzverfahrens geprüft wird, ob für jeden separat geschätzten Verlauf wenigstens ein oder zwei Offset-Werte ermittelbar sind, wobei andernfalls der Zustandsschätzer mittels einer Logik je nach Anzahl der Offset-Werte beschränkt wird. Dies trägt dem Umstand Rechnung, dass es Situationen gibt, in welchen lediglich ein Offset-Wert pro Verlauf ermittelbar ist, weil z. B. lediglich zwei Fahrspurmarkierungen im Kamerabild erkennbar sind. In derartigen Situationen kann mit Hilfe einer teilweisen Abschaltung des Zustandsschätzers die Stabilität des Verfahrens gewährleistet werden.

Weiterhin kann der Zustandsschätzer einen Zustandsvektor verwenden, dessen Komponenten zusätzlich einen Winkelversatz des Fahrzeugs relativ zu einem der beiden separaten Verläufe, einen Winkelversatz des Fahrzeugs relativ zu dem anderen der beiden separaten Verläufe, einen Neigungswinkel der Fahrbahnebene relativ zu einer mittleren Fahrbahnebene und/oder eine laterale Geschwindigkeit des Fahrzeugs umfassen. Die entsprechende Modellkurve kann auf diese Weise relativ exakt an eine tatsächliche Fahrspurmarkierung angepasst werden.

Es kann vorgesehen sein, dass die Referenzachse mit der Längsmittelachse des Fahrzeugs oder mit deren vertikaler Projektion auf die Fahrbahnebene zusammenfällt und die Offset-Werte jeweils einen Querversatz einer Fahrspurmarkierung in der Fahrbahnebene angeben. Eine derartige Festlegung der Referenzachse vereinfacht die Berechnungen sowie die entsprechende Programmierung.

Bevorzugt werden lediglich diejenigen zwei Fahrspurmarkierungen dem Tracking-Prozess unterzogen, welche einer linken und einer rechten Fahrspurbegrenzung der durch das Fahrzeug befahrenen Eigen-Fahrspur entsprechen. Dies reicht für eine zuverlässige Erkennung der Eigen-Fahrspur aus und ermöglicht es, die Anzahl an zu schätzenden Parametern zu beschränken.

Die Erfindung betrifft auch ein Fahrzeug mit einer in Fahrtrichtung ausgerichteten Kamera zur Aufnahme von Bildern eines vor dem Fahrzeug befindlichen Verkehrsraumes und einer Einheit zur Auswertung der von der Kamera aufgenommenen Bilder, wobei die Auswerteeinheit dazu ausgebildet ist, ein Verfahren wie vorstehend beschrieben auszuführen.

Vorteilhafte Ausführungsformen der Erfindung können auch den abhängigen Ansprüchen, den Zeichnungen sowie der zugehörigen Beschreibung entnommen werden.

Die Erfindung wird nachfolgend beispielhaft unter Bezugnahme auf die beigefügten Figuren beschrieben.

Fig. 1    zeigt eine Draufsicht auf einen Verkehrsraum mit einem Kraftfahrzeug, welches eine erfindungsgemäße Vorrichtung zur Fahrspurerkennung umfasst.

Fig. 2    zeigt ein beispielhaftes Bild, welches durch eine an dem Kraftfahrzeug gemäß Fig. 1 angeordnete Bilderfassungseinrichtung aufgenommen wurde.

Fig. 3    zeigt zwei Modellkurven, die den Verlauf einer linken Fahrspurmarkierung und einer rechten Fahrspurmarkierung angenähert beschreiben.

Fig. 4    zeigt vereinfacht den Ablauf eines Schätzverfahrens zur Ermittlung einer optimalen Zuordnung von Offset-Werten zu jeweils einem von zwei separaten Verläufen von Fahrspurmarkierungen.

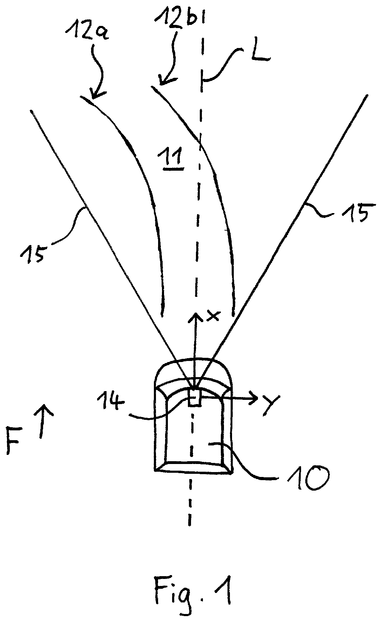

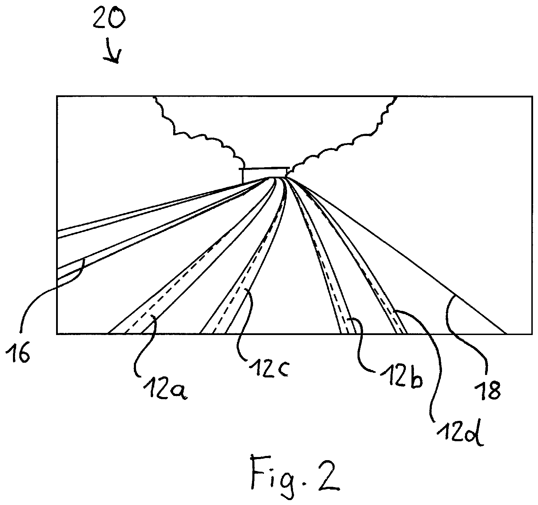

Gemäß Fig. 1 bewegt sich ein Kraftfahrzeug 10 auf einer Eigen-Fahrspur 11 einer Straße in einer Fahrtrichtung F vorwärts. Die Eigen-Fahrspur 11 ist durch eine linke Fahrspurmarkierung 12a und eine rechte Fahrspurmarkierung 12b - beispielhaft jeweils in Form einer durchgezogenen Linie - begrenzt. In einem vorderen Bereich des Fahrzeughimmels ist eine Kamera 14 angebracht, welche fortlaufend ein Bild des vor dem Kraftfahrzeug 10 befindlichen Verkehrsraumes erfasst, wie durch die Sichtstrahlen 15 dargestellt ist. Durch die Kameraposition wird das Weltkoordinatensystem x, y aufgespannt. Weiterhin ist die Kamera 14 mit einem nachgeordneten Bildverarbeitungs-Computer gekoppelt, welcher in Fig. 1 jedoch nicht dargestellt ist. Ein Beispiel für ein von der Kamera 14 erfasstes Bild 20 des vor dem Kraftfahrzeug 10 befindlichen Verkehrsraumes ist in Fig. 2 vereinfacht dargestellt.

Die Kamera 14 und der zugehörige Bildverarbeitungs-Computer sind Teil eines Fahrerassistenzsystems, beispielsweise eines Systems zum Unterstützen des Spurhaltens (Spurhalteassistent, lane departure warning system, LDW). Dieses System erkennt und verfolgt Fahrspurmarkierungen anhand der von der Kamera 14 in regelmäßigen Zeitabständen erfassten Bilder, wie nachfolgend genauer ausgeführt wird.

Es werden mittels geeigneter, auf dem Fachgebiet bekannter Bildverarbeitungsalgorithmen in einem erfassten Bild 20 alle potentiellen Fahrspurmarkierungen 12a, 12b, 12c, 12d, 16, 18 extrahiert, d.h. es werden diejenigen Bildbereiche als erkannte Fahrspurmarkierungen identifiziert, welche ein vorgegebenes Erkennungskriterium für Fahrspurmarkierungen erfüllen. Dieser Vorgang erfolgt bevorzugt segmentweise, also anhand von einzelnen Teilstücken einer Linie. Bei den so erkannten Fahrspurmarkierungen kann es sich um die vorstehend genannte linke und rechte Fahrspurmarkierung 12a, 12b, um weitere Fahrspurmarkierungen 12c, 12d, aber auch um Leitplanken 16 oder Straßenränder 18 handeln. In der dargestellten Situation erfolgt aufgrund einer Baustelle ein durch die Markierungen festgelegter Fahrspurwechsel von links nach rechts, weshalb die Fahrspurmarkierungen 12a, 12b wie dargestellt mit den Fahrspurmarkierungen 12c, 12d konkurrieren.

Die linke und die rechte Fahrspurmarkierung 12a, 12b werden als zu verfolgende Fahrspurmarkierungen einem Tracking-Prozess unterzogen, bei welchem die zeitliche Änderung des Verlaufs der Fahrspurmarkierungen 12a, 12b in der Fahrbahnebene mittels eines gemeinsamen Zustandsschätzers separat verfolgt wird.

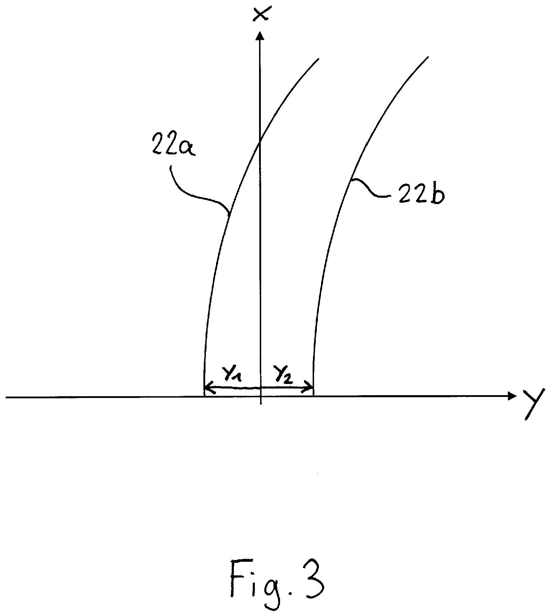

Als Modellkurven für die Fahrspurmarkierungen in Weltkoordinaten werden bei der beschriebenen Ausführungsform der Erfindung Polynome 3. Grades verwendet, welche jeweilige Koeffizienten für ein kubisches, ein quadratisches und ein lineares Glied sowie zusätzlich einen Offset-Wert als Absolutglied aufweisen. Es könnten jedoch auch andere Arten von Modellkurven verwendet werden. In Fig. 3 sind beispielhafte Modellkurven 22a, 22b in der Fahrbahnebene dargestellt.

Für jede erkannte und gegebenenfalls durch einen Klassifikator verifizierte Fahrspurmarkierung 12a, 12b, 12c, 12d kann ein Offset-Wert $y_i$ angegeben werden, welcher den y-Achsenabschnitt, also einen Querversatz der erkannten Fahrspurmarkierung 12a, 12b, 12c, 12d relativ zur x-Achse angibt, welche hier parallel zur Längsmittelachse L (Fig. 1) des Kraftfahrzeugs 10 verläuft.

Das eigentliche Tracking, also das Verfolgen der zeitlichen Änderung des Verlaufs der zwei zu verfolgenden Fahrspurmarkierungen 12a, 12b wird bevorzugt von einem eigenständigen Modul durchgeführt und erfolgt mittels eines Zustandsschätzers, welcher auf einem Extended Kalman-Filter beruht. Im Einzelnen kann das Tracking gemäß den Prinzipien durchgeführt werden welche in dem Aufsatz "A Novel Approach to Lane Detection and Tracking" von M. Meuter et al., Proc. IEEE Conference on Intelligent Transportation Systems, St. Louis, USA, October 3-7, 2009, Seiten 582-587, beschrieben sind.

Mittels des Extended Kalman-Filters werden im beschriebenen Ausführungsbeispiel zwei Verlaufshypothesen und vier Offset-Werte gleichzeitig verfolgt. Der den Systemzustand beschreibende Zustandsvektor $\boldsymbol{x}$ ist hierbei durch folgenden Ausdruck gegeben:

$$\boldsymbol{x} = \begin{bmatrix} c_{11} & c_{10} & \beta_1 & c_{21} & c_{20} & \beta_2 & y_1 & y_2 & y_3 & y_4 & \gamma & v \end{bmatrix}$$

wobei $c_{11}$ und $c_{10}$ Krümmungsänderungen des ersten Verlaufs, $\beta_1$ der Offset-Winkel des Fahrzeugs 14 bezüglich des ersten Verlaufs, $c_{21}$ und $c_{20}$ Krümmungsänderungen des zweiten Verlaufs, $\beta_2$ der Offset-Winkel des Fahrzeugs 14 bezüglich des zweiten Verlaufs, $y_1$-$y_4$ Offset-Werte, $\gamma$ der Neigungswinkel der Fahrbahnebene in Bezug auf eine mittlere Fahrbahnebene und $v$ die Seitengeschwindigkeit des Fahrzeugs 14 ist.

Der Systemzustand wird also durch zwei separate Verläufe für die linke und die rechte Fahrspurmarkierung 12a, 12b und zusätzlich durch vier Offset-Werte $y_1$-$y_4$ repräsentiert. Die Offset-Werte $y_1$-$y_4$ werden jeweils einem der beiden Verläufe zugeordnet. Darüber, welcher Offset-Wert welchem Verlauf zugeordnet wird, entscheidet ein nicht dem Zustandsschätzer zugehöriges, zusätzliches Schätzverfahrens, welches auf einem Maximum-Likelihood-Ansatz beruht.

Um das Schätzverfahren durchführen zu können, wird die Zuordnung der vier Offset-Werte $y_1$-$y_4$ zu jeweils einem der zwei separaten Verläufe durch einen Satz von binären Parametern $m_1$-$m_4$ angegeben, welche zu einem Zuordnungsvektor $\boldsymbol{m}$ zusammengefasst werden:

$$\boldsymbol{m} = \begin{bmatrix} m_1 & m_2 & m_3 & m_4 \end{bmatrix}$$

Ein Wert von 0 für einen binären Parameter mit dem Index i bedeutet, dass der Offset-Wert mit dem Index $i$ zu dem ersten Verlauf gehört, während ein Wert von 1 für denselben binären Parameter bedeutet, dass der betreffende Offset-Wert zu dem zweiten Verlauf gehört. Ein Wert von [0 0 0 1] für den Vektor $\boldsymbol{m}$ bedeutet somit, dass die Offset-Werte $y_1$-$y_3$ zum ersten Verlauf gehören und der Offset-Wert $y_4$ zum zweiten Verlauf gehört.

Die Modellkurve ist gegeben durch:

$$f_i(\boldsymbol{x}_t, l) =$$

$$\left[ \begin{array}{c} (1-m_i) \cdot (1/6\ c_{11}l^3 + \tfrac{1}{2}\ c_{10}l^2 + \beta_1 l) + m_i \cdot (1/6\ c_{21}l^3 + \tfrac{1}{2}\ c_{20}l^2 + \beta_2 l) + y_i \\ \gamma l \end{array} \right]$$

Im Rahmen des zusätzlichen Schätzverfahrens werden vorgegebene Zuordnungsvektoren m als Hypothesen behandelt. Der Tracking-Prozess wird dann für alle möglichen Hypothesen separat durchgeführt, wobei nach einer vorgegebenen Anzahl von Rechenzyklen diejenige Hypothese bestimmt wird, für welche die Abweichung zwischen den geschätzten Modellkurven und den Messungen, d. h. Erkennungen, am geringsten ist. Diese Hypothese wird als "wahrscheinlichste Hypothese" eingestuft. Um den Rechenaufwand zeitlich zu verteilen, werden hierbei nacheinander Einzelvergleichsschritte durchgeführt, innerhalb welcher jeweils zwei Tracking-Prozesse für verschiedene Hypothesen gleichzeitig ausgeführt werden.

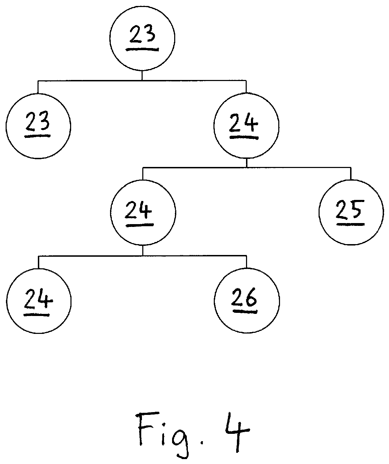

Wie in Fig. 4 dargestellt ist, wird mit einer im Prinzip beliebigen Starthypothese 23, z. B. $\boldsymbol{m}$ = [0 0 0 0], begonnen. Diese Starthypothese 23 wird mit einer ersten Vergleichshypothese 24, z. B. $\boldsymbol{m}$ = [1 0 0 0], verglichen. Wenn sich im Rahmen des Trackings herausstellt, dass wie in dem dargestellten Beispiel die erste Vergleichshypothese 24 wahrscheinlicher ist als die Starthypothese 23, wird die erste Vergleichshypothese 24 als neue Basishypothese verwendet, während die Starthypothese 23 verworfen wird. Die erste Vergleichshypothese 24 wird dann mit einer zweiten Vergleichshypothese 25, z. B. $\boldsymbol{m}$ = [1 1 0 0], verglichen, die bislang noch nicht geprüft wurde. Im dargestellten Beispiel setzt sich hierbei wiederum die erste Vergleichshypothese 24 durch. Im nächsten Schritt wird diese dann mit einer dritten Vergleichshypothese 26, z. B. $\boldsymbol{m}$ = [1 0 1 0], verglichen. Dementsprechend schließen sich weitere, nicht dargestellte Einzelvergleichsschritte an. Auf diese Weise werden alle möglichen Hypothesen geprüft, wobei unwahrscheinliche Hypothesen nach und nach aussortiert werden, bis lediglich die wahrscheinlichste Hypothese verbleibt. Diese Hypothese wird für das nachfolgende Tracking als optimale Zuordnung zwischen Offset-Werten und Verläufen verwendet.

Die Vorhersage des Zustands unter Berücksichtigung geeigneter Bewegungs- und Messfunktionen sowie das Umrechnen zwischen Weltkoordinaten und Bildkoordinaten kann in grundsätzlich bekannter Weise - z. B. wie in dem vorstehenden Aufsatz beschrieben - durchgeführt werden. Üblicherweise wird eine nichtlineare Funktion $\boldsymbol{h}$ verwendet, um einen Punkt $\boldsymbol{x}_t$ auf der Fahrspurmarkierung mit Beobachtungen $\boldsymbol{y}_t$ in der Bildebene in Beziehung zu setzen:

$$\boldsymbol{y}_t = \boldsymbol{h}(f_i(\boldsymbol{x}_t, l))$$

Vor dem Durchführen des zusätzlichen Schätzverfahrens wird geprüft, ob für jeden separat geschätzten Verlauf wenigstens ein oder zwei Offset-Werte ermittelbar sind. Falls dies nicht der Fall ist, werden Teile des Zustandsschätzers mittels einer geeigneten Logik deaktiviert.

Die Erfindung ermöglicht eine robuste Fahrspurerkennung auch in komplexen Verkehrssituationen wie Stadtverkehrs-Situationen oder Baustellen-Situationen, wobei das Tracking-Verfahren auch bei vorliegenden Verzweigungen oder Vereinigungen von Fahrspurmarkierungen stabil bleibt.

Bezugszeichenliste

| | |
|---|---|
| 10 | Kraftfahrzeug |
| 11 | Eigen-Fahrspur |
| 12a-d | Fahrspurmarkierung |
| 14 | Kamera |
| 15 | Sichtstrahl |
| 16 | Leitplanke |
| 18 | Straßenrand |
| 20 | erfasstes Bild |
| 22a, 22b | Modellkurve |
| 23 | Starthypothese |
| 24 | erste Vergleichshypothese |
| 25 | zweite Vergleichshypothese |
| 26 | dritte Vergleichshypothese |

F     Fahrtrichtung
L     Längsmittelachse

**Patentansprüche**

1. Verfahren zur Fahrspurerkennung für ein kamerabasiertes Fahrerassistenzsystem, welches eine an einem Fahrzeug (10) angebrachte Kamera (14) zur Aufnahme von Bildern (20) eines vor dem Fahrzeug (10) befindlichen Verkehrsraumes aufweist, mit den Schritten, dass

a) in von der Kamera (14) aufgenommenen Bildern (20) diejenigen Bildbereiche als erkannte Fahrspurmarkierungen (12a-d, 16, 18) identifiziert werden, welche ein vorgegebenes Erkennungskriterium erfüllen;
b) wenigstens zwei erkannte Fahrspurmarkierungen (12a, 12b) als zu verfolgende Fahrspurmarkierungen einem Tracking-Prozess unterzogen werden, bei welchem die zeitliche Änderung des Verlaufs der wenigstens zwei zu verfolgenden Fahrspurmarkierungen (12a, 12b) in der Fahrbahnebene mittels eines gemeinsamen rekursiven Zustandsschätzers, nämlich eines erweiterten Kalman-Filters, verfolgt wird,
c) mittels des Zustandsschätzers für wenigstens zwei der zu verfolgenden Fahrspurmarkierungen (12a, 12b) separate Verläufe geschätzt werden;
d) für mehrere der erkannten Fahrspurmarkierungen (12a-d) ein jeweiliger Offset-Wert ermittelt wird, welcher einen Querversatz der erkannten Fahrspurmarkierung (12a-d) relativ zu einer parallel zu einer Längsmittelachse (L) des Fahrzeugs (10) verlaufenden Referenzachse angibt; und
e) mittels eines zusätzlichen Schätzverfahrens eine Zuordnung der ermittelten Offset-Werte zu jeweils einem der separaten Verläufe der zu verfolgenden Fahrspurmarkierungen (12a, 12b) vorgenommen wird,
wobei der Zustandsschätzer einen Zustandsvektor verwendet, dessen Komponenten Verlaufs-Parameter für jede der zu verfolgenden Fahrspurmarkierungen (12a, 12b) und zusätzlich mehrere durch die Offset-Werte gebildete Offset-Parameter umfasst,
wobei für genau zwei der zu verfolgenden Fahrspurmarkierungen (12a, 12b) separate Verläufe geschätzt werden, wobei die Zuordnung der ermittelten Offset-Werte zu jeweils einem der zwei separaten Verläufe durch einen Satz von binären Parametern angegeben wird,
wobei gegebene Wertekombinationen des Satzes von binären Parametern als Eingangsvariablen zur Erzeugung zusätzlicher Schätzhypothesen verwendet werden, und wobei
für jede erzeugte Hypothese unter Verwendung der Ungarischen Methode eine separate Zuordnung von Messwerten zu den Fahrspurmarkierungen (12a, 12b) durchgeführt wird.

2. Verfahren nach Anspruch 1,
**dadurch gekennzeichnet, dass**
der Satz von binären Parametern zur Parametrisierung einer den Verlauf der Fahrspur angenähert beschreibenden Modellkurve (22a, 22b) herangezogen wird.

3. Verfahren nach Anspruch 1 oder 2,
**dadurch gekennzeichnet, dass**
der Tracking-Prozess für mehrere unterschiedliche, bevorzugt für alle möglichen, Hypothesen separat durchgeführt wird und, beispielsweise nach einer vorgegebenen Anzahl von Rechenzyklen, mittels des zusätzlichen Schätzverfahrens eine wahrscheinlichste Hypothese bestimmt wird, für welche die Abweichung zwischen den geschätzten Verläufen der zu verfolgenden Fahrspurmarkierungen (12a, 12b) und den Verläufen von erkannten Fahrspurmarkierungen (12a-d) am geringsten ist.

4. Verfahren nach Anspruch 3,
**dadurch gekennzeichnet, dass**
in Einzelvergleichsschritten jeweils lediglich zwei Tracking-Prozesse für verschiedene Hypothesen gleichzeitig durchgeführt werden.

5. Verfahren nach Anspruch 4,
**dadurch gekennzeichnet, dass**
beginnend mit einer beliebigen Starthypothese (23) aufeinanderfolgend mehrere Einzelvergleichsschritte durchgeführt werden, wobei jeweils die wahrscheinlichste Hypothese eines vorangegangenen Einzelvergleichsschritts mit einer bislang noch nicht einem Einzelvergleichsschritt unterzogenen Hypothese (24, 25, 26) verglichen wird.

**6.** Verfahren nach einem der vorherigen Ansprüche,
**dadurch gekennzeichnet, dass**
zum Vornehmen der Zuordnung der ermittelten Offset-Werte zu jeweils einem der separaten Verläufe der zu verfolgenden Fahrspurmarkierungen (12a, 12b) ein parametrisches Schätzverfahren, insbesondere ein Maximum-Likelihood-Verfahren, angewendet wird.

**7.** Verfahren nach einem der vorherigen Ansprüche,
**dadurch gekennzeichnet, dass**
für wenigstens drei und vorzugsweise für wenigstens vier erkannte Fahrspurmarkierungen (12a-d) jeweilige Offset-Werte ermittelt werden.

**8.** Verfahren nach einem der vorherigen Ansprüche,
**dadurch gekennzeichnet, dass**
vor dem Durchführen des zusätzlichen Schätzverfahrens geprüft wird, ob für jeden separat geschätzten Verlauf wenigstens ein oder zwei Offset-Werte ermittelbar sind, wobei andernfalls der Zustandsschätzer mittels einer Logik je nach Anzahl der Offset-Werte beschränkt wird.

**9.** Verfahren nach einem der vorherigen Ansprüche,
**dadurch gekennzeichnet, dass**
der Zustandsschätzer einen Zustandsvektor verwendet, dessen Komponenten zusätzlich einen Winkelversatz des Fahrzeugs (10) relativ zu einem der beiden separaten Verläufe, einen Winkelversatz des Fahrzeugs (10) relativ zu dem anderen der beiden separaten Verläufe, einen Neigungswinkel der Fahrbahnebene relativ zu einer mittleren Fahrbahnebene und/oder eine laterale Geschwindigkeit des Fahrzeugs (10) umfassen.

**10.** Verfahren nach einem der vorherigen Ansprüche,
**dadurch gekennzeichnet, dass**
die Referenzachse mit der Längsmittelachse (L) des Fahrzeugs (10) oder mit deren vertikaler Projektion auf die Fahrbahnebene zusammenfällt und die Offset-Werte jeweils einen Querversatz einer Fahrspurmarkierung (12a-d) in der Fahrbahnebene angeben.

**11.** Verfahren nach einem der vorherigen Ansprüche,
**dadurch gekennzeichnet, dass**
lediglich diejenigen zwei Fahrspurmarkierungen (12a, 12b) dem Tracking-Prozess unterzogen werden, welche einer linken und einer rechten Fahrspurbegrenzung der durch das Fahrzeug (10) befahrenen Eigen-Fahrspur (11) entsprechen.

**12.** Fahrzeug (10) mit einer in Fahrtrichtung (F) ausgerichteten Kamera (14) zur Aufnahme von Bildern (20) eines vor dem Fahrzeug (10) befindlichen Verkehrsraumes und einer Einheit zur Auswertung der von der Kamera (14) aufgenommenen Bilder (20), wobei die Auswerteeinheit dazu ausgebildet ist, ein Verfahren nach einem der vorherigen Ansprüche auszuführen.

**Claims**

**1.** A method for lane recognition for a camera-based driver assistance system, which has a camera (14) attached to a vehicle (10) for recording images (20) of a traffic area located in front of the vehicle (10), comprising the steps that

a) in images (20) recorded by the camera (14), those image regions which satisfy a predefined recognition criterion are identified as recognized lane markings (12a-d, 16, 18);
b) at least two recognized lane markings (12a, 12b) are subjected to a tracking process as lane markings to be tracked, in which tracking process the temporal change of the course of the at least two lane markings (12a, 12b) to be tracked in the road plane is tracked by means of a common recursive state estimator, namely an extended Kalman filter;
c) separate courses are estimated by means of the state estimator for at least two of the lane markings (12a, 12b) to be tracked;
d) for a plurality of the recognized lane markings (12a-d), a respective offset value is determined which indicates a transverse offset of the recognized lane marking (12a-d) relative to a reference axis extending in parallel with a longitudinal center axis (L) of the vehicle (10); and

e) an association of the determined offset values with a respective one of the separate courses of the lane markings (12a, 12b) to be tracked is carried out by means of an additional estimation method,
wherein the state estimator uses a state vector whose components comprise course parameters for each of the lane markings (12a, 12b) to be tracked and additionally comprise a plurality of offset parameters formed by the offset values,
wherein separate courses are estimated for exactly two of the lane markings (12a, 12b) to be tracked, wherein the association of the determined offset values with a respective one of the two separate courses is specified by a set of binary parameters,
wherein given value combinations of the set of binary parameters are used as input variables for generating additional estimation hypotheses, and wherein
a separate association of measurement values with the lane markings (12a, 12b) is performed for each generated hypothesis using the Hungarian method.

2. A method in accordance with claim 1,
**characterized in that**
the set of binary parameters is used to parameterize a model curve (22a, 22b) which approximately describes the course of the lane.

3. A method in accordance with claim 1 or 2,
**characterized in that**
the tracking process is performed separately for a plurality of different hypotheses, preferably for all the possible hypotheses, and, for example after a predefined number of computing cycles, a most probable hypothesis is determined by means of the additional estimation method, for which hypothesis the deviation between the estimated courses of the lane markings (12a, 12b) to be tracked and the courses of recognized lane markings (12a-d) is the smallest.

4. A method in accordance with claim 3,
**characterized in that**,
in individual comparison steps, in each case only two tracking processes are simultaneously performed for different hypotheses.

5. A method in accordance with claim 4,
**characterized in that**,
starting with an arbitrary starting hypothesis (23), a plurality of individual comparison steps are consecutively performed, wherein in each case the most probable hypothesis of a preceding individual comparison step is compared with a hypothesis (24, 25, 26) which has so far not yet been subjected to an individual comparison step.

6. A method in accordance with any one of the preceding claims,
**characterized in that**
a parametric estimation method, in particular a maximum likelihood method, is used to perform the association of the determined offset values with a respective one of the separate courses of the lane markings (12a, 12b) to be tracked.

7. A method in accordance with any one of the preceding claims,
**characterized in that**
respective offset values are determined for at least three and preferably for at least four recognized lane markings (12a-d).

8. A method in accordance with any one of the preceding claims,
**characterized in that**,
before performing the additional estimation method, it is checked whether at least one or two offset values can be determined for each separately estimated course, wherein otherwise the state estimator is limited by means of a logic depending on the number of offset values.

9. A method in accordance with any one of the preceding claims,
**characterized in that**
the state estimator uses a state vector whose components additionally comprise an angular offset of the vehicle (10) relative to one of the two separate courses, an angular offset of the vehicle (10) relative to the other of the two separate courses, an angle of inclination of the road plane relative to a central road plane and/or a lateral speed of the vehicle (10).

**10.** A method in accordance with any one of the preceding claims,
**characterized in that**
the reference axis coincides with the longitudinal center axis (L) of the vehicle (10) or with its vertical projection onto the road plane and the offset values each indicate a transverse offset of a lane marking (12a-d) in the road plane.

**11.** A method in accordance with any one of the preceding claims,
**characterized in that**
only those two lane markings (12a, 12b) are subjected to the tracking process that correspond to a left and a right lane boundary of the own lane (11) traveled by the vehicle (10).

**12.** A vehicle (10) comprising a camera (14) oriented in the direction of travel (F) for recording images (20) of a traffic area located in front of the vehicle (10) and a unit for evaluating the images (20) recorded by the camera (14), wherein the evaluation unit is configured to carry out a method in accordance with any one of the preceding claims.

**Revendications**

**1.** Procédé de reconnaissance de voie pour un système d'aide à la conduite basé sur caméra qui présente une caméra (14) installée sur un véhicule (10) destinée à prendre des images (20) d'une région de circulation se trouvant à l'avant du véhicule (10), comprenant les étapes dans lesquelles

(a) dans les images (20) prises par la caméra (14), les zones d'image qui remplissent un critère de reconnaissance donné sont identifiées comme marquages de voie reconnus (12a-d, 16, 18), ;
(b) au moins deux marquages de voie reconnus (12a, 12b) en tant que marquages de voie à suivre sont soumis à un processus de suivi dans lequel le changement temporel du tracé desdits au moins deux marquages de voie à suivre (12a, 12b) est suivi dans le plan de la chaussée au moyen d'un estimateur d'état récursif commun, notamment un filtre de Kalman élargi ;
(c) des tracés séparés sont estimés au moyen de l'estimateur d'état pour au moins deux des marquages de voies à suivre (12a, 12b) ;
(d) une valeur de décalage respective, qui indique un décalage transversal du marquage de voie reconnu (12a-d) relativement à un axe de référence s'étendant parallèlement à un axe central longitudinal (L) du véhicule (10), est calculée pour plusieurs des marquages de voies à suivre (12a-d) ; et
(e) une affectation des valeurs de décalage calculées à un tracé respectif des tracés séparés des marquages de voies à suivre (12a, 12b) est effectuée au moyen d'un procédé d'estimation supplémentaire,
dans lequel l'estimateur d'état utilise un vecteur d'état dont les composantes incluent des paramètres de tracé pour chacun des marquages de voie à suivre (12a, 12b) et en outre plusieurs paramètres de décalage formés par les valeurs de décalage,
dans lequel, pour exactement deux des marquages de voie à suivre (12a, 12b), des tracés séparés sont estimés, l'affectation des valeurs de décalage calculées à un tracé respectif des deux tracés séparés est indiquée par un jeu de paramètres binaires,
dans lequel des combinaisons de valeur données du jeu de paramètres binaires sont utilisées comme variables d'entrée pour générer des hypothèses d'estimation supplémentaires, et dans lequel
pour chaque hypothèse générée, une affectation séparée de valeurs de mesure aux marquages de vois (12a, 12b) est exécutée en utilisant la méthode hongroise.

**2.** Procédé selon la revendication 1,
**caractérisé en ce que**
le jeu de paramètres binaires est exploité pour paramétrer une courbe modèle (22a, 22b) décrivant approximativement le tracé de la voie.

**3.** Procédé selon la revendication 1 ou 2,
**caractérisé en ce que**
le processus de suivi est exécuté pour plusieurs hypothèses différentes, de préférence pour toutes les hypothèses possibles, et, par exemple après un nombre donné de cycles de calcul, une hypothèse la plus probable est déterminée au moyen du procédé d'estimation supplémentaire, pour laquelle la déviation entre les tracés estimés des marquages de voie à suivre (12a, 12b) et les tracés de marquages de voie reconnus (12a-d) est la plus faible.

4. Procédé selon la revendication 3,
   **caractérisé en ce que**
   dans des étapes de comparaison individuelle, seuls deux processus de suivi sont exécutés simultanément pour différentes hypothèses.

5. Procédé selon la revendication 4,
   **caractérisé en ce que**
   plusieurs étapes de comparaison individuelle sont exécutées les unes après les autres en commençant par une hypothèse de départ quelconque (23), l'hypothèse la plus probable d'une étape de comparaison individuelle étant à chaque fois comparée à une hypothèse (24, 25, 26) n'ayant jusqu'à présent pas encore été soumise à une étape de comparaison individuelle.

6. Procédé selon l'une quelconque des revendications précédentes,
   **caractérisé en ce que**
   un procédé d'estimation paramétrique, en particulier un procédé de maximum de vraisemblance, est utilisé pour effectuer l'affectation des valeurs de décalage calculées à un tracé respectif des tracés séparés des marquages de voie à suivre (12a, 12b).

7. Procédé selon l'une quelconque des revendications précédentes,
   **caractérisé en ce que**
   des valeurs de décalage respectives sont calculées pour au moins trois et de préférence pour au moins quatre marquages de voie reconnus (12a-d).

8. Procédé selon l'une quelconque des revendications précédentes,
   **caractérisé en ce que**
   avant d'exécuter le procédé d'estimation supplémentaire, il est vérifié s'il est possible de calculer au moins une ou deux valeurs de décalage pour chaque tracé séparément estimé, l'estimateur d'état étant sinon limité au moyen d'une logique en fonction du nombre de valeurs de décalage.

9. Procédé selon l'une quelconque des revendications précédentes,
   **caractérisé en ce que**
   l'estimateur d'état utilise un vecteur d'état dont les composantes incluent en outre un décalage angulaire du véhicule (10) relativement à l'un des deux tracés séparés, un décalage angulaire du véhicule (10) relativement à l'autre des deux tracés séparés, un angle d'inclinaison du plan de chaussée relativement à un plan de chaussée médian et/ou une vitesse latérale du véhicule (10).

10. Procédé selon l'une des revendications précédentes,
    **caractérisé en ce que**
    l'axe de référence coïncide avec l'axe central longitudinal (L) du véhicule (10) ou avec sa projection verticale sur le plan de chaussée et les valeurs de décalage indiquent respectivement un décalage transversal d'un marquage de voie (12a-d) dans le plan de chaussée.

11. Procédé selon l'une quelconque des revendications,
    **caractérisé en ce que**
    seuls les deux marquages de voie (12a, 12b) qui correspondent à une délimitation de voie de gauche et de droite de la voie propre parcourue par le véhicule (10) sont soumis au processus de suivi.

12. Véhicule (10) comprenant une caméra (14) orientée dans une direction d'avance (F) pour prendre des images (20) d'une région de circulation se trouvant à l'avant du véhicule et une unité d'évaluation des images (20) prises par la caméra (14), l'unité d'évaluation étant réalisée pour mettre en oeuvre un procédé selon l'une quelconque des revendications précédentes.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- A Novel Multi-lane Detection and Tracking System. **KUN ZHAO et al.** Intelligent Vehicles Symposium. IEEE, 03. Juni 2012, vol. IV, 1084-1089

- **M. MEUTER et al.** A Novel Approach to Lane Detection and Tracking. *Proc. IEEE Conference on Intelligent Transportation Systems, St. Louis, USA,* 03. Oktober 2009, 582-587